# EUROPEAN PATENT APPLICATION

(11) **EP 2 322 418 A1**
(43) Date of publication of application: **18.05.2011**
(21) Application number: 09808351.2
(22) Date of filing: 18.03.2009
(51) Int. Cl.: B63B 1/16

(54) **WIG VEHICLE EXCLUDING HORIZONTAL STABILIZER**

(30) Priority: 20.08.2008 KR 20080081184
(71) Applicant: Wing Ship Technology Corp, Daejeon 305-509 (KR)
(72) Inventor: KANG, Chang Gu, Daejeon 305-340 (KR); LEE, Han Jin, Daejeon 305-707 (KR); LEE, Chang Min, Daejeon 305-325 (KR)
(74) Representative: Cabinet Plasseraud
(86) International application number: PCT/KR2009/001354
(87) International publication number: WO 2010/021445

(57) **Abstract**

The present invention includes a body having a fuselage, a wing unit including a main wing, and a propulsion unit including an engine. The wing unit includes a main wing protruding out from the lateral center of the WIG vehicle fuselage, a downward wing which is vertically and downwardly installed on the outer tip of the main wing, and a canard which protrudes out horizontally from the front end of the fuselage, which is in the moving direction of the WIG vehicle from the main wing. The canard includes a horizontal stabilization plate which has a stationary horizontal panel structure, and a variable flap which is installed to face the rear surface of the horizontal stabilization plate. In the lateral cross section shape, the front surface portion including the leading edge is round at a proper thickness to prevent clearance generated by turning of the canard, the trailing edge is sharp and straight, and the thickness of a portion between the thickest portion and rear portion narrows. The lateral cross section of the entire horizontal stabilizer is airfoil-shaped. Accordingly, the present invention is able to resolve the design problem of the horizontal stabilizer caused by a ground effect because the WIG vehicle comprises a canard for stabilizing vertical disturbance instead of a horizontal stabilizer.

## Description

### [Technical Field]

The present invention relates, in general, to a wing structure of a Wing-In-Ground effect (WIG) vehicle and, more particularly, to a fuselage of a WIG vehicle and a wing configuration, in which a wing structure of the WIG vehicle is constructed such that it substitutes a horizontal stabilizer with a canard.

### [Background Art]

Generally, aircraft and WIG vehicles are equipped with a horizontal stabilizer in order to reduce pitching. The horizontal stabilizer is designed such that it has a proper size and a proper initial angle in consideration of a downwash angle caused by the front main wings.

The WIG vehicle is subjected to changes in the downward angle not only by an intended change in the shape, such as a change in the flat shape of the main wing, but also by the cruising height. Specifically, the size of the downward angle is small due to the inclination of the stream toward being parallel at a low altitude, whereas the size of the downward angle becomes greater to the original value at a high altitude.

That is, sometimes it is not easy to produce an appropriate design for the horizontal stabilizer, and when the WIG vehicle is cruising, undesirable instability may occur in some cases.

However, no devices capable of substituting the horizontal stabilizer have been developed to date.

### [Disclosure]

### [Technical Problem]

Accordingly, the present invention has been made keeping in mind the above problems occurring in the prior art, and an object of the present invention is to decrease the amount of severe changes in downwash angle and provide consistent control over the pitching of a fuselage in a WIG vehicle that cruises at a low altitude close to the surface of the water.

Another object of the present invention is to remove design difficulties of a horizontal stabilizer using the ground effect and thus exclude structural addition, which would otherwise be necessary for the installation of the horizontal stabilizer, thereby improving the ease of fabrication and reducing the weight of the fuselage.

### [Technical Solution]

In an aspect, the present invention provides a WIG vehicle that excludes a horizontal stabilizer. The WIG vehicle includes a body including a fuselage, a wing structure including a main wing, and a propulsion unit including an engine. The wing structure includes the main wing protruding outward from the central portion of the fuselage of the WIG vehicle; a downward wing bent vertically downward from the distal end of the main wing; and a canard protruding horizontally outward from the front part of the fuselage. The canard is placed ahead of the main wing in the direction in which the WIG vehicle proceeds. The downward wing includes a downward panel bent downward from and integrally fixed to the distal end of the main wing, and a variable rudder part opposing a rear surface of the downward panel. The downward wing including the rudder part has a vertical cross-section that is configured such that the front portion of the downward wing including the leading edge is rounded at a suitable thickness so that flow separation does not occur, and the rear portion of the downward wing has a thickness converging from the portion having a maximum thickness, with the trailing edge of the downward wing sharply converging in a linear shape. The entire downward wing has a vertical cross-sectional shape formed as an airfoil.

In an embodiment of the invention, the canard may include a horizontal stabilizing plate having a fixed horizontal panel structure and an elevator part provided to oppose the horizontal stabilizing plate. The elevator part has a side cross-sectional shape such that the front portion of the elevator part including the leading edge is rounded with a suitable thickness so that flow separation does not occur, the thickness converging from the portion that has a peak thickness, and the trailing edge of the elevator part is configured such that it converges in a straight shape. The canard has an airfoil-like overall side cross-section.

In addition, the lower portion of the downward wing may be shaped as an arc or a streamlined "V" in order to decrease friction with the sea water or the air adjacent to the surface of the sea.

In addition, the downward wing may be made of carbon fiber aluminum.

Furthermore, a plurality of ribs and a plurality of spars may be provided inside the main wing. The ribs connect the leading edge to the trailing edge of the main wing, and are shaped as an airfoil, and the spars extend across the ribs.

### [Advantageous Effects]

When the wing structure of the invention is mounted to the WIG vehicle, there are effects capable of decreasing the amount of severe changes in downwash angle and providing consistent control over the pitching of the fuselage in a WIG vehicle that cruises at a low altitude close to the surface of the water.

In addition, it is possible to improve the ease of fabrication and reduce the weight of the fuselage by excluding the structural addition, which would otherwise be necessary for the installation of the horizontal stabilizer.

### [Description of Drawings]

FIG. 1 is a side cross-sectional view of a WIG vehicle excluding a horizontal stabilizer;
FIG. 2 is a first embodiment of a wing structure of the WIG vehicle according to the invention;
FIG. 3 is a perspective cross-sectional view of the main wing and the downward wing shown in FIG. 2;
FIG. 4 is an internal perspective view showing the main wing inside which spars and ribs are provided;
FIG. 5 is an assembled perspective view showing a coupling portion of the downward wing;
FIG. 6 is a view showing the shape of an embodiment of the lower portion of the downward wing;
FIG. 7 is a view showing the structure of a downward wing according to another embodiment; and
FIGS. 8 and 9 are views showing the shape of other embodiments of the lower portion of the downward wing shown in FIG. 7.

### <Major Reference Numerals of the Drawings>

| | |
|---|---|
| 100: fuselage of a WIG vehicle | 200: main wing |
| 211: spar | 212: rib |
| 300: downward wing | 310: downward panel |
| 320: rudder part | 400: horizontal stabilizer |
| 410: horizontal stabilizing plate | 420: elevator part |
| 500: vertical stabilizer | 600: canard |
| 610: horizontal stabilizing plate | 620: elevator part |
| 615: depression | |

### [Best Mode]

Hereinafter, The wing structure of a Wing-In-Ground effect (WIG) vehicle according to the invention will now be described in detail with reference to the accompanying drawings.

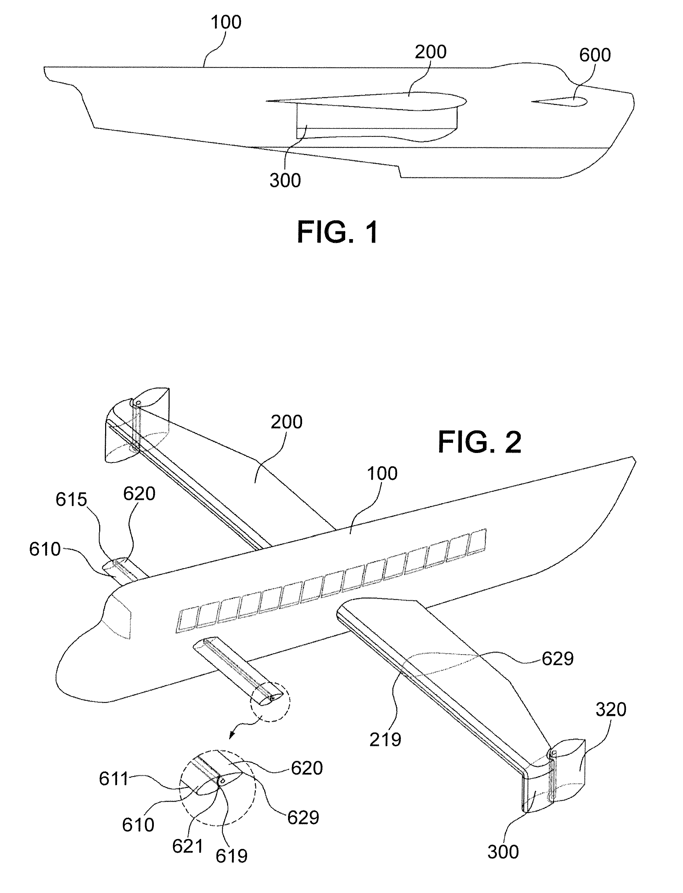

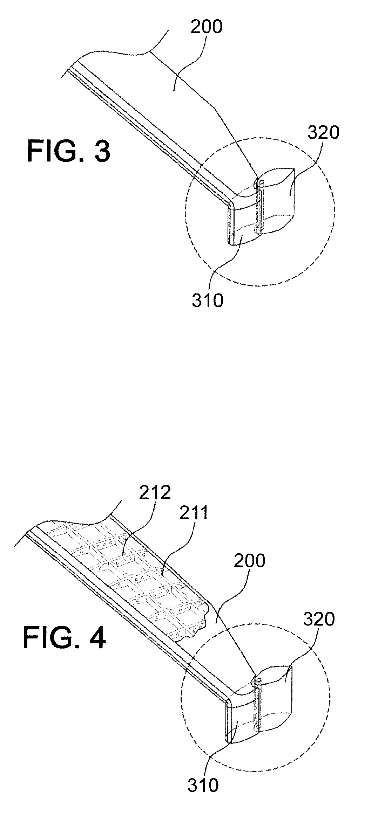

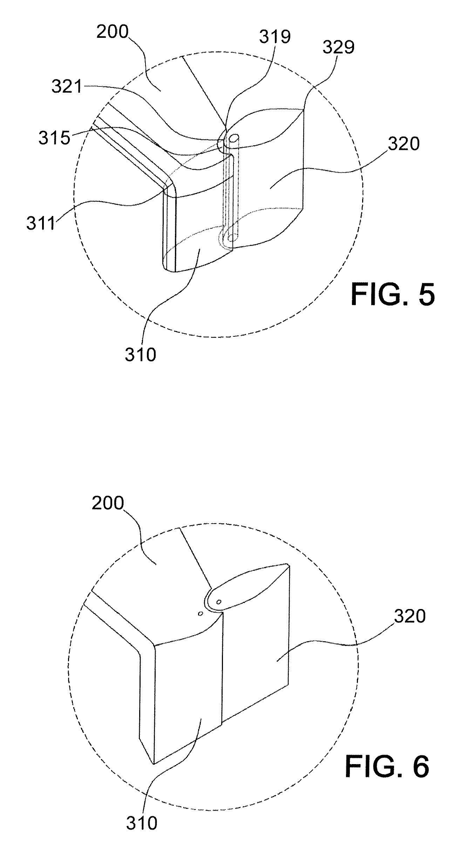

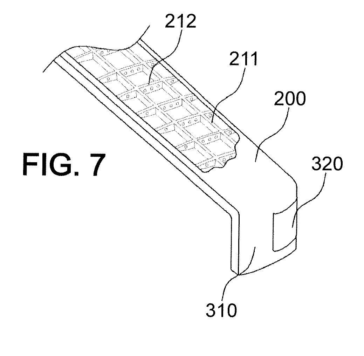

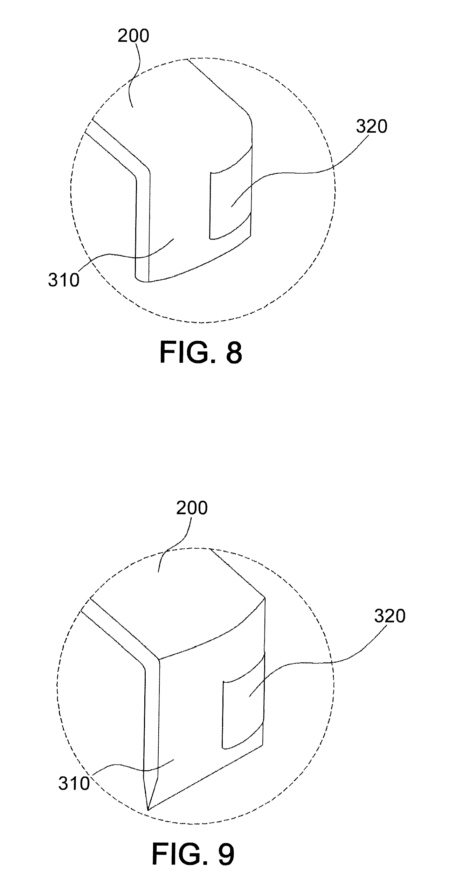

FIG. 1 is a side cross-sectional view of a WIG vehicle excluding a horizontal stabilizer, FIG. 2 is a first embodiment of a wing structure of the WIG vehicle according to the invention, FIG. 3 is a perspective cross-sectional view of the main wing and the downward wing shown in FIG. 2, FIG. 4 is an internal perspective view showing the main wing inside which spars and ribs are provided, FIG. 5 is an assembled perspective view showing a coupling portion of the downward wing, FIG. 6 is a view showing the shape of an embodiment of the lower portion of the downward wing, FIG. 7 is a view showing the structure of a downward wing according to another embodiment, and FIGS. 8 and 9 are views showing the shape of other embodiments of the lower portion of the downward wing shown in FIG. 7.

In the following description with reference to the accompanying drawings, the wing structure is provided to be symmetrical on the left and right with respect to the axis of the fuselage of the WIG vehicle. Therefore, it should be understood that, although the structure of one wing is described, the other wing has the same structure.

FIG. 1 is a side cross-sectional view of a WIG vehicle excluding a horizontal stabilizer. The wing structure will be described first with reference to FIGS. 2 to 6.

As shown in FIG. 2, the overall wing structure of a WIG vehicle according to a first embodiment of the invention includes a main wing 200 protruding outward from the central portion of a fuselage 100 of the WIG vehicle, a downward wing 300 bent vertically downward from a respective distal end of the main wing 200 without a seam, and a canard 600 protruding horizontally outward from the front part of the fuselage 100, placed ahead of the main wing 200 in the direction in which the WIG vehicle proceeds. The downward wing 300 includes a downward panel 310 bent downward from and integrally fixed to the distal end of the main wing 200, and a variable rudder part 320 opposing the rear surface of the downward panel 310. In the vertical cross-sectional shape of the downward wing 300 including the rudder part 320, the front portion including the leading edge 321 is rounded at a suitable thickness such that flow separation does not occur, and the rear portion is configured such that its thickness converges from the portion having the maximum thickness and the trailing edge 329 sharply converges in a linear shape. The vertical cross-sectional shape of the entire downward wing 300 is configured to have the form of an airfoil.

Specifically, although the downward wing of the related art has a linear panel-like shape with a predetermined thickness in the vertical direction, the structure of the downward wing according to the first embodiment has a streamlined cross-sectional shape such as an airfoil and thereby serves to decrease turbulence and increase thrust. More specifically, below the wing, fluid generally flows from the inside to the outside. In this case, if a distal end plate or the downward wing is vertically arranged at the distal end of the wing, the flow of fluid below the wing has a predetermined angle of approach (i.e., an angle of attack) with respect to the distal end plate. This arrangement generates lift at the distal end plate. The lift can be divided into a component in the direction in which the WIG vehicle proceeds and a component in the horizontal direction. The component in the direction in which the WIG vehicle proceeds serves to increase thrust. Therefore, if the distal end plate has an airfoil cross-section that is a typical cross-section of a wing, the generation of the lift can be maximized.

In other words, the leading edge of the lifting surface at the distal end is configured such that it has a suitable thickness so that flow separation does not occur, and the trailing edge is sharp such that the lift is maximized when flow separation occurs, thereby serving to decrease resistance due to decreased turbulence and increase thrust. In addition, since the volume of the downward wing having this shape is much greater than that of the distal end plate of the related art, the design is advantageous in absorbing impact when the vehicle takes off and lands on the water and providing stability against rolling. Therefore, the downward wing can substitute a float for WIG vehicles and water planes. Since a water plane is equipped with a float having the form of a ski as an auxiliary landing gear, the downward wing can substitute the float when its cross-sectional shape and lower shape are streamlined as described above, thereby simplifying the structure.

In the downward wing 300, the fixed structure of the downward panel 310 and the variable structure of the rudder part 320, which opposes the downward panel 310, are intended such that the downward wing 300 can be used to control yawing in the WIG vehicle 100 instead of a vertical stabilizer. In greater detail, when the wing is disposed on the upper portion of the fuselage, the relatively large downward wing 300 is attached to the main wing in order to maximize the ground effect. In this case, the lifting surface phenomenon is employed, and a drive unit 320 such as a rudder of the vertical stabilizer is installed on the rear surface of the lifting surface. The drive unit 320 is operated in order to provide stability against yawing and compensate for the asymmetry of thrust in the lateral direction.

Here, the downward panel 310 is a stationary type that is connected to and bent vertically downward from the distal end of the main wing 200 without a seam. The rudder part 320 is a variable type, and is mounted to the rear surface of the downward panel 310 in order to maneuver the fuselage to the left or right.

The canard 600 is provided on the front part of the fuselage 100 of the WIG vehicle ahead of the main wing 200 in the direction in which the WIG vehicle proceeds, such that it protrudes horizontally outward. The canard 600 includes a fixed horizontal stabilizing plate 610 in the front portion thereof, the horizontal stabilizing plate 610 horizontally protruding outwards, and an elevator part 620 fixed to the horizontal stabilizing plate 610 in order to maneuver the fuselage to climb or descend.

A detailed description will be given below of the structures of the downward wing 300 and the canard 600.

First, the main wing 200, the downward panel 310, and the horizontal stabilizing plate 610 are configured such that they are fixed when maneuvering the WIG vehicle. The rudder part 320, which rotates the fuselage 100 to the left and right in response to the operation of the drive unit, and the elevator part 620, which maneuvers the fuselage to climb or descend in response to the operation of the drive unit, are configured such that they are variable when maneuvering the WIG vehicle.

That is, the trailing edge 329 of the rudder part 320 is configured to rotate to the left and right, and the trailing edge 629 of the elevator part 620 is configured to rotate up and down in order to provide stability against pitching and compensate for the asymmetry of thrust in the lateral direction.

In this fashion, the wing structure of the WIG vehicle excluding the vertical stabilizer, which is intended to control pitching, is realized.

The main wing 200 protrudes outward from the central portion of the side of the WIG vehicle, and is formed as a smooth panels having an airfoil-like side shape that is the same as an airfoil of aircraft of the related art, the panels being sequentially continued, and the interval between the leading edge 201 and the trailing edge 209 decreasing outward. The airfoil shape can be described in greater detail as follows: The lateral shape of the leading edge 201 is horizontally linear, and the upward/downward shape of the leading edge 201 is smoothly rounded. In the section from the leading edge 201 to the trailing edge 209, the height of the upward/downward streamlined portion of the rounded portion increases across the section from the peak of the leading edge 201 to the position "3/10 to 4/10," and the height of the upward/downward streamlined portion decreases across the section from the position "3/10 to 4/10" to the trailing edge 209, so that the height converges in a sharp shape at the peak of the trailing edge 209. Here, it is preferred that the main wing 200 have an airfoil-like side shape and be made of carbon fiber aluminum.

In the downward panel 310, the leading edge 311 has a smoothly rounded lateral shape, and the trailing edge 319 has a sharp shape so that two separations occur. When the two separations are seen in a plan view, a depression (i.e. a groove) 315 is engraved along a vertical straight line between the separations.

Here, it is preferred that the downward panel 310 be made of carbon fiber aluminum, and the lower shape have the form of an arc or a streamlined "V" in order to minimize friction with the surface of the water or the ground.

The rudder part 320 is mounted by being spaced apart a predetermined distance from the depression 315 of the downward panel 310 so that it can move with directivity as a drive unit. In addition, the leading edge 321 is rounded, and the trailing edge 329 is sharply shaped such that one separation occurs. Here, it is preferred that the leading edge be formed as a vertical straight panel having an airfoil-like planar shape and be made of carbon fiber aluminum, and that the trailing edge have the form of an arc or a streamlined "V."

In addition, when the trailing edge 329 of the rudder part 320 is rotated to the left and right by operating the drive unit, the rounded portion of the leading edge 321 rotates without creating friction against the depression.

In addition, the canard 600 includes the horizontal stabilizing plate 610 having the structure of a fixed horizontal panel, and the elevator part 620 provided to oppose the horizontal stabilizing plate 610. Referring to the side cross-sectional shape of the elevator part 620, the front portion including the leading edge 621 is rounded with a suitable thickness so that separation does not occur, the thickness converging from the portion that has the peak thickness, and the trailing edge 629 is configured such that it converges in a straight shape. Thereby, the overall side cross-sectional shape of the canard 600 has the form of an airfoil that resembles a tadpole.

The horizontal stabilizing plate 610 protrudes outward from the front portion of the fuselage 100 ahead of the main wing, and is formed as smooth panels having an airfoil-like side shape that is the same as an airfoil of aircraft of the related art, the smooth panels being sequentially continued, and the interval between the leading edge 611 and the trailing edge 619 decreasing. The upward/downward shape of leading edge 611 is smoothly rounded, and the trailing edge 619 is sharply shaped such that two separations occur. When the two separations are seen in a plan view, a depression (i.e. a groove) 615 is engraved along a vertical straight line between the separations. In addition, it is preferred that the horizontal stabilizing plate 610 be made of carbon fiber aluminum.

The elevator part 620 is mounted by being spaced apart a predetermined distance from the depression 615 of the horizontal stabilizing plate 610. Here, the leading edge 621 of the elevator part 620 has a rounded shape, and the trailing edge 629 is sharply shaped such that one separation occurs. In addition, it is preferred that the elevator part have an airfoil-like side shape and be made of carbon fiber aluminum.

In addition, it is preferred that the elevator part 620 be mounted in a predetermined space such that the rounded portion of the leading edge 621 rotates without creating friction against the depression when the trailing edge 629 of the elevator part 620 is rotated to the left and right by operating the drive unit.

A more detailed description will be given below of the configuration of the downward wing 300 including the downward panel 310 and the rudder part 320 and of the configuration of the canard 600 including the horizontal stabilizing plate 610 and the elevator part 620.

As shown in the figures, in the leading edge 311 of the downward panel 310, the upward/downward shape is a vertical straight line, and the lateral shape is smoothly rounded. In the longitudinal direction from the leading edge 311 to the trailing edge 329 of the downward wing 300, the streamlined length of the rounded portion in the lateral direction increases from the peak of the leading edge 311 to the position "3/10 to 4/10," and the streamlined length of the rounded portion in the lateral direction decreases from the position "3/10 to 4/10" to the trailing edge 329 of the downward wing. The portion from the trailing edge 319 to the left streamlined end of the downward panel 310 forms a first sharp portion, and the portion from the trailing edge 319 to the right streamlined end of the downward panel 310 forms a second sharp portion. In addition, the depression (i.e. groove) 315 is formed in the space between the first and second sharp portions by being engraved vertically inward.

Here, the rudder part 320 acts as a rudder in order to maneuver the fuselage 100 to the left and right, has the form of an airfoil, and functions so that it can compensate for the asymmetry of thrust in the lateral direction, which occurs from the left and right ends of the left and right main wings when the drive unit is operated to maneuver the WIG vehicle.

That is, referring to the airfoil shape, the lateral shape of the leading edge 321 of the rudder part 320 is smoothly rounded. In the longitudinal direction from the leading edge 321 to the trailing edge 329, the streamlined length of the rounded portion in the lateral direction increases from the peak of the leading edge 321 to the position "3/10 to 4/10" along the airfoil shape of the downward wing 300, and the streamlined length of the rounded portion in the lateral direction decreases from the position "3/10 to 4/10" to the trailing edge 329 of the rounded portion, so that the length sharply converges at the peak of the trailing edge 329.

In addition, in the horizontal stabilizing plate 610, the leading edge 611 is a straight line in the lateral direction, and is smoothly rounded in the upward/downward direction. In the section from the leading edge 611 to the trailing edge 629 of the canard 600, the height of the upward/downward streamlined shape of the rounded portion increases from the peak of the leading edge 611 to the position "3/10 to 4/10" and decreases from the position "3/10 to 4/10" to the trailing edge of the canard 600. The portion from the trailing edge 619 to the upper streamlined end of the horizontal stabilizing plate 610 forms a third sharp portion, and the portion from the trailing edge 619 to the lower streamlined end of the horizontal stabilizing plate 610 forms a fourth sharp portion. In addition, the depression (i.e. groove) 615 is formed in the space between the third and fourth sharp portions by being engraved vertically inward.

Here, the elevator part 620 is constructed to have the form of an airfoil, and is a device that maneuvers the fuselage to climb and descend.

For this, the airfoil shape can be designed such that the upward/downward shape of the leading edge 621 is smoothly rounded. In addition, in the section from the leading edge 621 to the trailing edge 629, the height of the upward/downward streamlined portion of the rounded portion increases from the peak of the leading edge 621 to the position "3/10 to 4/10," the height of the upward/downward streamlined portion of the rounded portion decreases from the position "3/10 to 4/10" to the trailing edge 629, and the height sharply converges at the peak of the trailing edge 629.

As described above, the wing structure of the WIG vehicle of the invention is configured such that the wing is mounted symmetrically on the left and right with respect to the reference line of the fuselage 100 of the WIG vehicle. Although the wing structure of the WIG vehicle has been described with respect to one wing, the left and right wings have the same structure as they are symmetric.

Therefore, the wing structure of the WIG vehicle of the invention minimizes turbulence and induced drag that occur at the distal end of the main wing by maximizing the wing-in-ground effect (or wing-in-surface effect) by excluding the vertical stabilizer and the horizontal stabilizer unlike aircraft. Since the downward wing has a much greater volume than the distal end plate, it can absorb impact that is applied to the fuselage when WIG vehicle takes off and lands and provide stability against the rolling of the fuselage.

FIGS. 7 to 9 show another embodiment of the invention, in which the downward panel 310 and the rudder part 320 are configured the same as those of the foregoing embodiment but the coupling structure is different from that of the foregoing embodiment. That is, the vertical width of the rudder part 320 is set to be shorter than the vertical width of the downward panel 310, and the downward panel 310 has a storage recess 317 in the rear surface thereof, the storage recess 317 having a size capable of storing the rudder part 320. Thereby, the rudder part 320 is mounted inside the storage recess 317 in the rear surface of the downward panel 310. In the wing structure of the WIG vehicle, the functions of the respective components and the other wing shapes are the same as those of the foregoing embodiment. Therefore, repeated descriptions will be omitted.

FIGS. 8 and 9 show the structure of the lower portion of the downward wing 300 according to various embodiments of the downward wing structure.

The figures show the cases in which the shape of the lower portion has the form of a rounded arc, and in which the shape of the lower portion has the form of a streamlined "V." These shapes are intended to reduce friction with the water surface or the air layer on the water surface when the WIG vehicle is maneuvered, thereby further maximizing lift and thrust effects. In addition, these shapes are merely an illustrative example, but modifications and applications of the wing structure and the coupling structure are not, of course, limited to such shapes.

While the present invention has been shown and described with reference to the certain exemplary embodiments thereof, it will be understood by those skilled in the art that various changes in form and details may be made therein without departing from the scope of the present invention. Therefore, the scope of the invention are not limited to the foregoing embodiments, but shall be defined by the appended claims and equivalents thereof.

### [Industrial Applicability]

As described above, in general, aircraft and WIG vehicles are equipped with a horizontal stabilizer in order to reduce pitching. The horizontal stabilizer is designed such that it has a proper size and a proper initial angle in consideration of a downwash angle caused by the front main wings. The WIG vehicle is subjected to changes in the downward angle not only by an intended change in the shape, such as a change in the flat shape of the main wing, but also by the cruising height. Specifically, the size of the downward angle is small due to the inclination of the stream toward being parallel at a low altitude, whereas the size of the downward angle becomes greater to the original value at a high altitude. That is, sometimes it is not easy to produce an appropriate design for the horizontal stabilizer, and when the WIG vehicle is cruising, undesirable instability may occur in some cases. However, no devices capable of substituting the horizontal stabilizer have been developed to date. The need and demand for the wing structure of the wing ship of the invention, which has been developed by conceiving the foregoing problems, will further increase in response to an increase in demand for wing ships from now on.

## Claims

1. A wing-in-ground effect vehicle, comprising a body including a fuselage, a wing structure including a main wing, and a propulsion unit including an engine, wherein the wing structure comprises:
a main wing protruding outward from a central portion of the fuselage of the wing-in-ground effect vehicle;
a downward wing bent vertically downward from a distal end of the main wing; and
a canard protruding horizontally outward from a front part of the fuselage, the canard being placed ahead of the main wing in a direction in which the wing-in-ground effect vehicle proceeds,
wherein the downward wing includes a downward panel bent downward from and integrally fixed to the distal end of the main wing, and a variable rudder part opposing a rear surface of the downward panel, wherein the downward wing including the rudder part has a vertical cross-section that is configured such that a front portion of the downward wing including a leading edge is rounded at a suitable thickness so that flow separation does not occur, and a rear portion of the downward wing has a thickness converging from a portion having a maximum thickness, with a trailing edge of the downward wing sharply converging in a linear shape, and wherein the entire downward wing has a vertical cross-sectional shape formed as an airfoil, whereby a horizontal stabilizer is excluded.

2. The wing-in-ground effect vehicle according to claim 1, wherein the canard includes a horizontal stabilizing plate having a fixed horizontal panel structure and an elevator part provided to oppose the horizontal stabilizing plate, wherein the elevator part has a side cross-sectional shape such that a front portion of the elevator part including a leading edge is rounded with a suitable thickness so that flow separation does not occur, the thickness converging from a portion that has a peak thickness, and a trailing edge of the elevator part is configured such that it converges in a straight shape, wherein the canard has an airfoil-like overall side cross-section.

3. The wing-in-ground effect vehicle according to claim 1 or 2, wherein a lower portion of the downward wing is shaped as an arc or a streamlined "V" in order to decrease friction with sea water or air adjacent to sea surface.

4. The wing-in-ground effect vehicle according to claim 3, wherein the downward wing is made of carbon fiber aluminum.

5. The wing-in-ground effect vehicle according to claim 1 or 2, wherein a plurality of ribs and a plurality of spars are provided inside the main wing, wherein the ribs connect the leading edge to the trailing edge of the main wing, and are shaped as an airfoil, and the spars extend across the ribs.
